(19) Europäisches Patentamt

European Patent Office

Office européen des brevets

(11) Veröffentlichungsnummer: **0 649 822 A1**

## (12) EUROPÄISCHE PATENTANMELDUNG

(21) Anmeldenummer: **94115920.4**

(22) Anmeldetag: **10.10.94**

(51) Int. Cl.⁶: **C03C 17/245**

(30) Priorität: **23.10.93 DE 4336211**

(43) Veröffentlichungstag der Anmeldung:
**26.04.95 Patentblatt 95/17**

(84) Benannte Vertragsstaaten:
**AT BE CH DE DK ES FR GB GR IE IT LI LU NL PT SE**

(71) Anmelder: **Th. Goldschmidt AG**
**Goldschmidtstrasse 100**
**D-45127 Essen (DE)**

(72) Erfinder: **Eisen, Heinz-Günter**
**Schönscheidtstrasse 16 a**
**D-45307 Essen (DE)**
Erfinder: **Vallerien, Sven-Uwe, Dr.**
**Laupendahler Landstrasse 47**
**D-45239 Essen (DE)**

(54) **Verfahren zur Heissendvergütung von Hohlglaskörpern durch Aufdampfen von Zinnverbindungen.**

㊗ Verfahren zur Heißendvergütung von Hohlglaskörpern durch Aufbringen von gegebenenfalls in organischen Lösungsmitteln gelösten Zinnverbindungen auf die auf 500 bis 600 °C heiße äußere Oberfläche von Hohlglaskörpern, wobei die Zinnverbindungen unter Ausbildung dünner Zinnoxidschichten pyrolysieren, wobei man Monobutylzinntricarboxylate, welche in organischen Lösungsmitteln eines Siedepunktes < 180 °C gelöst sein können, auf die Glasoberflächen aufdampft.

EP 0 649 822 A1

Die Erfindung betrifft ein Verfahren zur Heißendvergütung von Hohlglaskörpern durch Aufdampfen von gegebenenfalls in organischen Lösungsmitteln gelösten Zinnverbindungen auf die auf 500 bis 600 °C heiße äußere Oberfläche von Hohlglaskörpern, wobei die Zinnverbindungen unter Ausbildung dünner Zinnoxidschichten pyrolysieren.

Dünne Zinnoxidschichten werden durch Pyrolyse von Zinnverbindungen auf den heißen Glasoberflächen erzeugt. Dabei können die Zinnverbindungen entweder als Dampf oder als Spray, der eine gelöste Zinnverbindung enthält, aufgebracht werden.

In der US-C-3 414 429 wird ein Verfahren beschrieben, in dem diese Schichten aus Zinn-IV-halogeniden, wie z.B. Zinntetrachlorid, erzeugt werden. Verbindungen dieses Typs hydrolysieren leicht in Anwesenheit von Feuchtigkeitsspuren. Dabei entstehen stark korrosive Verbindungen. Des weiteren ist die Ausbeute bei dem Aufbau der Schicht nur gering. Da der nicht zum Schichtaufbau verwendete Anteil der Zinn-IV-halogenide nicht ohne größeren Aufwand zurückgeführt werden kann, ist dieses Verfahren deshalb nur bedingt geeignet. Außerdem führt der spontane Zerfall des Zinntetrachlorids zu einem ungleichmäßigen Schichtaufbau, der sich durch optisch störende Interferenzen bemerkbar macht.

Zinn-IV-chlorid enthält pro Atom Zinn vier Atome Chlor und ist meist bei der technischen Anwendung zudem noch mit zusätzlichem Chlorwasserstoff stabilisiert. Hauptnachteil dieses Systems ist der hohe Chlorgehalt. Bei der thermischen Zersetzung bildet sich Chlorwasserstoffgas, welches Gesundheitsgefährdungen verursachen und Materialien angreifen oder beschädigen kann.

Aus der DE-C-25 41 710 ist ein Verfahren bekannt, bei dem die Zinn-IV-oxid-Schicht durch Pyrolyse von Monoorganozinntrichlorid der allgemeinen Formel $RSnCl_3$, wobei R eine Alkylgruppe mit einem bis acht Kohlenstoffatomen darstellt, auf der heißen Glasoberfläche erzeugt wird. Die Verbindungen werden dabei entweder verdampft oder aufgesprüht. Bevorzugt wird Monobutylzinntrichlorid eingesetzt. Im Hinblick auf die Schadstoffemission ist hierbei nachteilig, daß je Zinnatom drei Chloratome frei werden und entsorgt werden müssen.

Verwendet man Zinn-II-chlorid, so verbessert sich zwar rechnerisch das Verhältnis von Zinn zu Chlor, wegen der geringen hydrolytischen Stabilität der wäßrigen Lösungen des Zinn-II-chlorids muß jedoch diesen Lösungen wieder Chlorwasserstoff zugesetzt werden. Es bleibt wieder das Problem erhöhter Korrosion der apparativen Teile durch die stark salzsaure Lösung.

In der DE-A-41 24 136 wird ein Verfahren beschrieben, bei dem Hohlglaskörper durch Aufsprühen einer Lösung, die 100 bis 1000 g/l $(OH)_2SnCl_2$ enthält, vergütet werden. Dabei können bis zu 50 Mol-% der Verbindung durch äquimolare Mengen der allgemeinen Verbindung $(HO)_xSn(C_2O_4)_y$, in der x einen Wert von 0,2 bis 3,8, y einen Wert von 1,9 bis 0,1 hat und $(2y+x) = 4$ ist, ersetzt werden. Selbst damit kann jedoch nur ein Zinn/Chlorverhältnis von bestenfalls angenähert 1 erreicht werden.

Lösungen von Alkylzinncarboxylaten können gemäß US-C-3 414 429 aufgesprüht werden zur Erzielung einer Heißendvergütung. Der Sprühauftrag hat jedoch technische Nachteile, insbesondere schlechte Homogenität und geringe Schichtbildungseffizienz. Die schlechte Ausbeute (Verhältnis Zinn (in die Schicht eingebaut) zu Zinn (angeboten)) rührt von dem Verlust des Materials, welches entweder danebengesprüht wird oder infolge nur unzureichenden Kontakts nicht zum Schichtaufbau beiträgt und als Zinnoxidpulver in Staubform in die Abluft gerät.

Im Rahmen der Heißendvergütung werden Zinnoxidschichten bis zu einer Schichtdicke von ca. 15 um erhalten. Diese Schichten auf den Glasoberflächen dienen als Haftvermittler für die bei einer anschließenden Kaltendvergütung aufgebrachten Wachsschichten. Diese dünnen Filme aus Naturwachs oder synthetischen Wachsen sind durchsichtig und schützen die Glasbehälter gegen Abrieb und Verkratzen (Kaltendvergütung).

Der vorliegenden Erfindung liegt das technische Problem der gleichmäßigen Beschichtung von äußeren Hohlglasoberflächen mit gegebenenfalls in Lösungsmitteln gelösten Zinnverbindungen unter Ausbildung von Zinnoxidschichten zugrunde. Dazu sollen Zinnverbindungen bereitgestellt werden, die auch in Form ihrer Lösungen lagerstabil und frei von Chlorid sind oder zumindest nur noch minimale Chloridgehalte enthalten. Die erzeugte Zinnoxidschicht soll dabei möglichst homogen sein.

Überraschenderweise können diese Anforderungen bei Anwendung des erfindungsgemäßen Verfahrens erfüllt werden, welches dadurch gekennzeichnet ist, daß man Monobutylzinntricarboxylate, welche in organischen Lösungsmitteln eines Siedepunktes < 180 °C gelöst sein können, aufdampft. Überraschend ist insbesondere die Verdampfbarkeit und die Erzeugbarkeit von Zinnoxidschichten.

Vorzugsweise dampft man als Monobutylzinntricarboxylate Carboxylate mit bis zu 6 Kohlenstoffatomen auf. Die Carboxylate können geradkettig oder verzweigt sein. Beispiele geeigneter Carboxylate sind die Acetate, Propionate, Butanate, iso-Butanate, Valerianate und Hexanoate, wobei die Monobutylzinntriacetate, -tripropionate und -tributanate besonders bevorzugt sind. Es können auch gemischte Carboxylate, wie zum Beispiel Monobutylzinndiacetatmonopropionat, verwendet werden.

Die niederen Carboxylate (insbesondere das Monobutylzinntriacetat, aber auch Monobutylzinntripropionat und Monobutyltributanat) können lösungsmittelfrei mittels eines heißen Trägergases, insbesondere Luft, auf die Oberflächen der zu vergütenden Glasgegenstände aufgebracht werden. Dagegen empfiehlt es sich, die höheren Carboxylate mit 4 bis 6 Kohlenstoffatomen in Form ihrer Lösungen zu verwenden, um einen gleichmäßigen Schichtaufbau zu erhalten.

Die Homogenität der Oberflächenbeschichtung von Hohlglasbehältern wird durch tunnelförmige Bedampfungshauben, durch die sich in Längsrichtung ein Förderband für den Transport der Glasbehälter erstreckt, gewährleistet. Innerhalb dieser Bedampfungshaube bildet sich mindestens ein mit dem Beschichtungsmittel angereicherter Luftkreislauf aus. Derartige Bedampfungshauben sind Stand der Technik und z. B. in der EP-A-0 103 109, EP-A-0 378 116 und DE-C-37 27 632 beschrieben.

Als Lösungsmittel sind Alkohole, Ketone, Ester oder deren Gemische mit Wasser besonders geeignet. Besonders bevorzugt sind

| als Alkohole | niedere aliphatische Alkohole, wie Ethanol, Propanol, i-Butanol, |
| als Ketone | insbesondere Aceton oder Butylethylketon und |
| als Ester | insbesondere Ethylacetat oder Butylacetat. |

Die Lösungsmittel können im Gemisch mit Wasser eingesetzt werden.

Monobutylzinntricarboxylate lassen sich leicht durch Reaktion von Monobutylzinnoxid mit Carbonsäuren bzw. Carbonsäureanhydriden herstellen. Das Monobutylzinntricarboxylat kann dann in dem gewünschtep Lösungsmittel oder Lösungsmittelgemisch gelöst werden. Auch bei längerem Stehen bilden sich keine Niederschläge. Konzentrierte Lösungen lassen sich ohne weiteres wieder auf Gebrauchskonzentration verdünnen.

Werden beim erfindungsgemäßen Verfahren Lösungen der Carboxylate verwendet, sollen die Monobutylzinntricarboxylate in den Lösungen in solchen Mengen enthalten sein, daß sie einen Zinngehalt von 100 g/l bis maximal 450 g/l, vorzugsweise 200 g/l bis 300 g/l aufweisen.

Das erfindungsgemäße Verfahren soll durch die folgenden Beispiele näher erläutert werden. Dabei wird zunächst die Bildung der Zinnoxidschicht auf der äußeren Oberfläche von Flaschen gezeigt, und es werden die Schichtdicke und Gleichmäßigkeit der erhaltenen Zinnoxidschichten untersucht.

Beispiel 1

a) Herstellung der Zinn-IV-oxid-Schicht

Nicht beschichtete 250-ml-Weißglasflaschen werden in einem Muffelofen auf 560 °C erwärmt. Nach Entnahme der Flasche aus dem Temperierofen wird diese aus ca. 35 cm Entfernung mit der Versuchslösung bedampft, die MonobutylzinntriacetaX in Ethanol (Zinngehalt 220 g/l) gelöst enthält. Ein heißer Luftstrom wird über diese Lösung geführt. Die Temperatur des Luftstroms beträgt etwa 280 °C, die Bedampfungsdauer 8 Sekunden.

Die Flasche wird hierbei am Flaschenhals gehalten und führt eine Rotationsbewegung von etwa 60 U/min aus.

Nach der Beschichtung werden die Flaschen sofort in den auf 560 °C erwärmten Muffelofen zurückgestellt und über einen Zeitraum von 12 Stunden kontinuierlich auf Raumtemperatur abgekühlt.

b) Bestimmung der Schichtdicke der Vergütungsschicht

Die Bestimmung der Zinn-IV-oxid-Schicht auf der Glasoberfläche erfolgt mit einem HOT END COATING METER der Firma AGR. Bei diesem Meßverfahren handelt es sich um eine Infrarotreflexionsmessung. Die Messung wird vom Flaschenboden aus in verschiedenen Höhen (1; 1,5; 2; 2,5; 3; 3,5 Zoll, gemessen vom Flaschenboden) des Flaschenmantels durchgeführt. Das Meßgerät tastet in jeder dieser Höhen den gesamten Flaschenumfang ab.

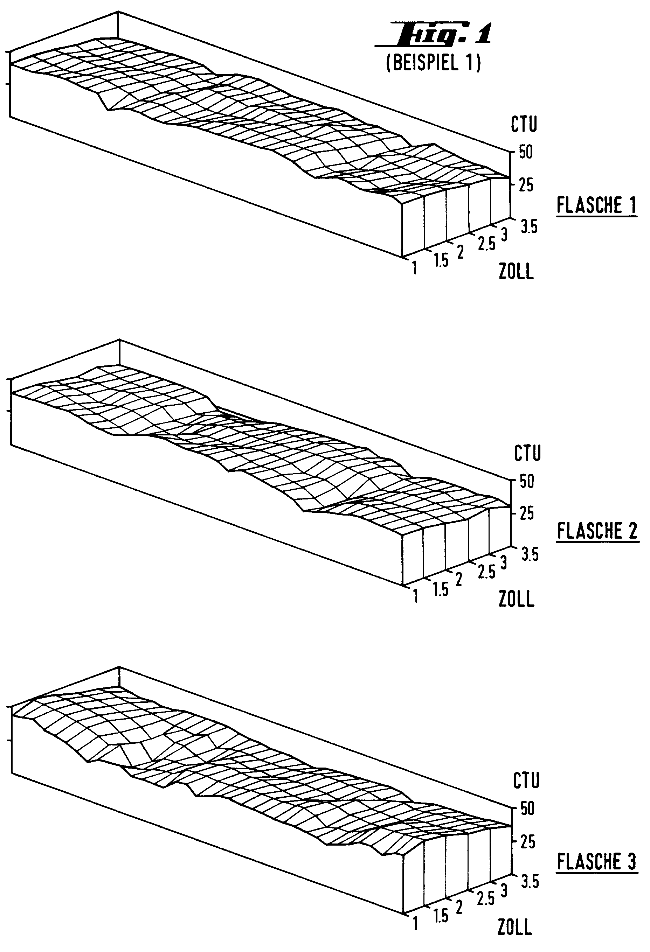

Abbildung 1 zeigt die Zinn-IV-oxid-Schicht von drei nach dem erfindungsgemäßen Verfahren vergüteten Weißglasflaschen. Dabei ist der homogene Schichtaufbau deutlich auf dem Glasmantel zu erkennen. Dies zeigt das für den technischen Einsatz notwendige gleichmäßige Zersetzungsverhalten von Monobutylzinntricarboxylatlösungen und damit seine Eignung zur Heißendvergütung. Die Verwendung von technischen Heißendvergütungshauben in den Glashütten gewährleistet eine gleichmäßige Oberflächenbeschichtung zur Erreichung einer Zinnoxidschicht bei Verdampfung unter realen Produktionsbedingnngen.

In Abbildung 1 ist die Schichtdicke der Zinn-IV-oxid-Schicht in CTU (Coating thickness unit) über dem gesamten abgerollten Flaschenmantel für drei mit ethanolischer Monobutylzinntriacetatlösung vergüteten Weißglasflaschen dargestellt.

Die industrieübliche Einheit 1 CTU entspricht etwa 0,25 nm Schichtdicke.

Beispiel 2

a) Herstellung der Zinn-IV-oxid-Schicht

Es wird wie in Beispiel 1 verfahren. Als schichterzeugende Zinnverbindung wird Monobutylzinntripropionat in ethanolischer Lösung verwendet. Die Bedampfungsdauer beträgt 12 Sekunden.

b) Bestimmung der Schichtdicke der Vergütungsschicht

Die Bestimmung erfolgt wie in Beispiel 1.

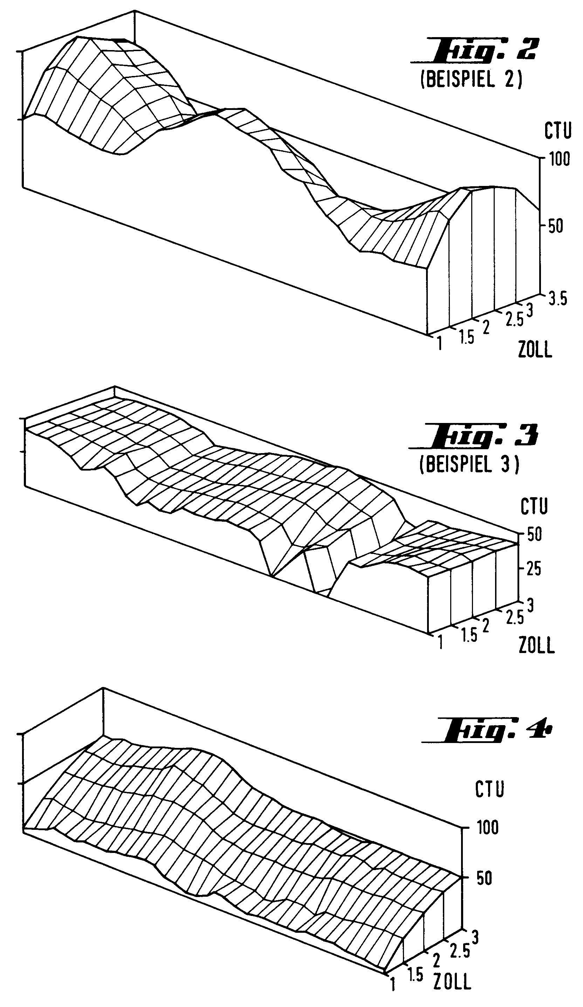

In Abbildung 2 ist die Schichtdicke der Zinn-IV-oxid-Schicht in CTU über dem gesamten abgerollten Flaschenmantel für eine mit ethanolischer Monobutylzinntripropionatlösung vergüteten Weißglasflasche dargestellt.

Beispiel 3

a) Herstellung der Zinn-IV-oxid-Schicht

Es wird wie in Beispiel 1 verfahren. Als schichterzeugende Zinnverbindung wird Monobutylzinntrihexanoat in ethanolischer Lösung verwendet. Die Bedampfungsdauer beträgt 20 Sekunden.

b) Bestimmung der Schichtdicke der Vergütungsschicht

Die Bestimmung erfolgt wie in Beispiel 1.
In Abbildung 3 ist die Schichtdicke der Zinn-IV-oxid-Schicht in CTU über dem gesamten abgerollten Flaschenmantel für eine mit ethanolischer Monobutylzinntrihexanoatlösung vergüteten Weißglasflasche dargestellt.

Beispiel 4

a) Herstellung der Zinn-IV-oxid-Schicht

Es wird wie in Beispiel 1 verfahren. Als schichterzeugende Zinnverbindung wird Monobutylzinntriacetat in reiner Form verwendet. Zum Aufbringen des Monobutylzinntriacetates wird ein heißer, mit Monobutylzinntriacetat beladener Luftstrom auf die rotierende Flasche gerichtet. Die Temperatur des Luftstromes beträgt ca. 280 °C, die Bedampfungsdauer beträgt 8 Sekunden. Die Wärmebehandlung der behandelten Flasche erfolgt wie in Beispiel 1 beschrieben.

b) Bestimmung der Schichtdicke der Vergütungsschicht

Die Bestimmung erfolgt wie in Beispiel 1.

In Abbildung 4 ist die Schichtdicke der Zinn-IV-oxid-Schicht in CTU über dem gesamten abgerollten Flaschenmantel für eine mittels verdampftem Monobutylzinntriacetat vergütete Weißglasflasche dargestellt. Die über die Flaschenhöhe ungleichmäßige Beschichtung resultiert aus der starren Verdampfungsapparatur und der niedrigen Luftgeschwindigkeit. In der technischen Anwendung garantieren Bedampfungshauben durch ihre hohe Luftverwirbelung eine gleichmäßige Hohlglasvergütung.

**Patentansprüche**

1. Verfahren zur Heißendvergütung von Hohlglaskörpern durch Aufbringen von gegebenenfalls in organischen Lösungsmitteln gelösten Zinnverbindungen auf die auf 500 bis 600 °C heiße äußere Oberfläche von Hohlglaskörpern, wobei die Zinnverbindungen unter Ausbildung dünner Zinnoxidschichten pyrolysieren, dadurch gekennzeichnet, daß man Monobutylzinntricarboxylate, welche in organischen Lösungsmitteln eines Siedepunktes < 180°C gelöst sein können, auf die Glasoberflächen aufdampft.

2. Verfahren nach Anspruch 1, dadurch gekennzeichnet, daß man als Monobutyltzinntricarboxylate Carboxylate mit bis zu 6 Kohlenstoffatomen aufdampft.

3. Verfahren nach Anspruch 1, dadurch gekennzeichnet, daß man Monobutylzinntriacetat, Monobutyltzinntripropionat oder Monobutyltzinntributanat in lösungsmittelfreier Form aufdampft.

4. Verfahren nach einem oder mehreren der Ansprüche 1 oder 2, dadurch gekennzeichnet, daß man Lösungen von Monobutylzinntricarboxylaten in Alkoholen, Ketonen, Estern oder deren Gemischen mit Wasser aufdampft.

5. Verfahren nach einem oder mehreren der vorhergehenden Ansprüche 1, 2 oder 4, dadurch gekennzeichnet, daß man Lösungen mit einem Zinngehalt von 100 g/l bis maximal 450 g/l aufdampft.

6. Verfahren nach Anspruch 5, dadurch gekennzeichnet, daß man Lösungen mit einem Zinngehalt von 200 g/l bis 300 g/l aufdampft.

**Fig. 1**
(BEISPIEL 1)

CTU
50
25
3.5
FLASCHE 1
1  1.5  2  2.5  3
ZOLL

CTU
50
25
3.5
FLASCHE 2
1  1.5  2  2.5  3
ZOLL

CTU
50
25
3.5
FLASCHE 3
1  1.5  2  2.5  3
ZOLL

Fig. 2
(BEISPIEL 2)

CTU
100
50
3.5
3
2.5
2
1.5
1
ZOLL

Fig. 3
(BEISPIEL 3)

CTU
50
25
3
2.5
2
1.5
1
ZOLL

Fig. 4

CTU
100
50
3
2.5
2
1.5
1
ZOLL

Europäisches
Patentamt

**EUROPÄISCHER RECHERCHENBERICHT**

Nummer der Anmeldung

EP 94 11 5920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 357 263 (M & T CHEMICALS)<br>* Seite 1, Zeile 1 - Seite 2, Zeile 5 *<br>--- | 1-6 | C03C17/245 |
| D,A | US-A-3 414 429 (BRUSS, JR.)<br>* Spalte 1, Zeile 49 - Spalte 2, Zeile 44 *<br>--- | 1-6 | |
| A | US-A-3 949 146 (KANE)<br>* Spalte 1, Zeile 63 - Spalte 2, Zeile 49 *<br>----- | 1-6 | |

| | RECHERCHIERTE SACHGEBIETE (Int.Cl.6) |
|---|---|
| | C03C |

Der vorliegende Recherchenbericht wurde für alle Patentansprüche erstellt

| Recherchenort | Abschlußdatum der Recherche | Prüfer |
|---|---|---|
| DEN HAAG | 19. Januar 1995 | Van Bommel, L |